# EUROPEAN PATENT SPECIFICATION

(11) **EP 3 779 027 B1**
(45) Date of publication and mention of the grant of the patent: **25.10.2023**
(21) Application number: 20199019.9
(22) Date of filing: 15.11.2017
(51) Int. Cl.: D06F 58/20, D06F 39/12, D06F 58/02, D06F 58/10, D06F 29/00, D06F 103/32, D06F 105/28

(54) **DUAL TYPE DRYING MACHINE**
DOPPELTROCKNUNGSMASCHINE
MACHINE DE SÉCHAGE DE TYPE DOUBLE

(30) Priority: 29.12.2016 KR 20160183099; 29.12.2016 KR 20160183101
(43) Date of publication of application: 17.02.2021
(62) Divisional of application: 17201892.1
(73) Proprietor: LG Electronics Inc., Yeongdeungpo-gu Seoul 07336 (KR)
(72) Inventor: BAE, Sang Hun, Seoul 08592 (KR)
(74) Representative: Ter Meer Steinmeister & Partner

(56) References cited:
- WO-A2-2008/123698
- KR-A- 20120 107 261
- US-A1- 2004 194 339
- US-A1- 2014 238 088

## Description

This application claims priority to and the benefit of Korean Patent Application Nos. 2016-0183099 filed on December 29, 2016 and 2016-0183101 filed on December 29, 2016.

### BACKGROUND

### Field of the Invention

The present invention relates to a drying machine, and more particularly, to a dual type drying machine including a main drying unit having a relatively large capacity and an auxiliary drying unit having a relatively small capacity.

### Discussion of Related Art

A drying machine is an apparatus for drying clothes and removes moisture from the clothes by supplying dried hot wind to the clothes.

In general, in the drying machine, an electric heater, a gas heater, and a heat pump are used as a heat source for heating air. Thus, the drying machine can be classified according to the type of a heat source.

In addition, the drying machine can also be classified according to a flow method of the air. An exhaust type drying machine is a drying machine that discharges high-temperature high-humidity air as it is after moisture is removed from the clothes to the outside, and a circulation type drying machine is a drying machine that does not discharge the high-temperature high-humidity air to the outside but re-uses the high-temperature high-humidity air through circulation. The circulation type drying machine is also called a condensation type drying machine.

The condensation type drying machine can be classified into a water-cooled drying machine, an air-cooled drying machine, and a heat pump type drying machine according to a condensation method.

In addition, the drying machine can be classified into various types of drying machines according to the shape of a laundry accommodation unit. A drying machine including a drum-shaped laundry accommodation unit that rotates around a horizontal shaft, is referred to as a horizontal shaft drum type drying machine, and a drying machine including a drum-shaped laundry accommodation unit that rotates around a vertical shaft, is referred to as a vertical shaft drum type drying machine. Also, a drying machine including a laundry accommodation unit fixed to an inside of a cabinet is referred to as a cabinet drying machine or refresher.
WO 2008/123698 A1 relates to a cloth treating apparatus with a main body to wash and dry clothes and an auxiliary treating apparatus provided at one side of the main body arranged inside a cabinet. Moreover, a control panel is arranged on a front surface or an upper surface of the main body.
US 2004/194339 A1 relates to a combination tumble and cabinet dryer appliance, which includes a housing with a tumble dryer and a cabinet dryer therein. The tumble dryer and cabinet dryer are operable independently of one another. Separate sources of hot air are provided to each of the tumble and cabinet dryers. The cabinet dryer extends over and along one side of the tumble dryer. A portion of the cabinet dryer extends substantially along the height of the housing so as to receive long hanging clothes, such as a dress. Removable shelves are provided in the cabinet dryer for drying sweaters and the like.
US 2014/238088 A1 relates to a laundry treating apparatus, which includes a first cabinet having a first receiving space to receive laundry, a second cabinet having a second receiving space to receive laundry, the second cabinet being separated from the first cabinet, a partition wall located at an upper part of the second receiving space to divide an interior of the second cabinet, a supply unit to selectively supply air to the first receiving space and the second receiving space, a discharge unit including an exhaust duct to discharge air in the first receiving space out of the first cabinet and a suction fan provided in the partition wall such that the suction fan is located in the second cabinet to suction air from the second receiving space such that the air from the second receiving space moves to the exhaust duct.

Hereinafter, a conventional heater drying machine and a conventional heat pump drying machine will be described.

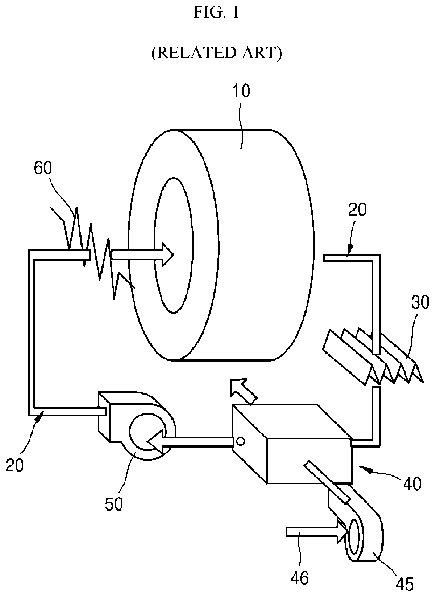

FIG. 1 is a conceptual view schematically illustrating an example of a heater drying machine.

As illustrated in FIG. 1, the heater drying machine includes a drum 10 and an air circulation unit 20 that circulates air through the drum 10. The air discharged from the drum 10 through the air circulation unit 20 flows into the drum 10. Thus, the air circulates through the air circulation unit 20. A drying fan 50 is provided for circulation of air. The drying fan 50 is provided inside the air circulation unit 20 and generates flow of the air.

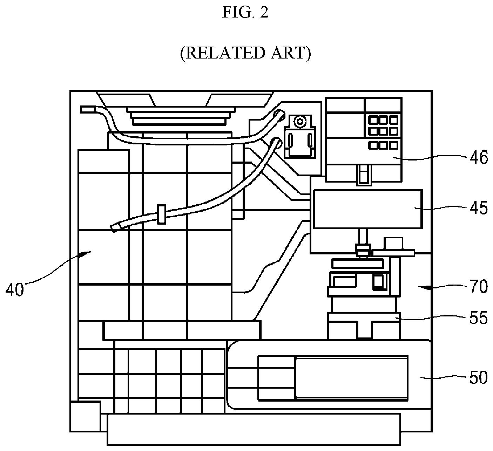

The air circulation unit 20 may include an additional flow path (duct), and a part of the flow path may be formed at a base (refer to reference numeral 70 of FIG. 2) of the heater drying machine. Furthermore, the drum 10 may also be a part of the air circulation unit 20.

In order to dry laundry in the drum 10, the air is heated by a heater 60, i.e., an electric heater. The heated air flows into the drum 10, and moisture of the air is removed from the laundry.

The air of which temperature and humidity increase by removing moisture from clothes, is discharged from the drum 10 and flows into a condenser 40. Of course, a filter 30 for removing foreign substances such as lint in the air, may be provided between the drum 10 and the condenser 40. The moisture of the high-temperature high-humidity air is condensed by the condenser 40, and the high-temperature high-humidity air changes into dried air. The condenser 40 enables the high-temperature high-humidity air to be heat-exchanged with external low-temperature air. In this case, the moisture in the high-temperature high-humidity air is condensed and removed.

A cooling fan 45 may be provided in the condenser 40 so that the external low-temperature air can flow in the drum 10 and can be discharged from the condenser 40 via the cooling fan 45. The cooling fan 45 is provided on a cooling flow path 46.

The cooling flow path 46 is provided so that the external air is supplied to the condenser 40 and then is discharged to the outside of the heater drying machine.

The low-temperature dried air discharged from the condenser 40 is heated by the heater 60 and changes into high-temperature dried air. The high-temperature dried air flows into the drum 10.

Thus, the air circulates via the drum 10, the condenser 40, the drying fan 50, and the heater 60, and drying may be performed through heating and condensation of the circulating air.

Meanwhile, the drying machine illustrated in FIG. 1 may be a blower type drying machine, because it blows the air into the drum 10 from the rear of the drum 10, and the right side of the drum 10 corresponds to the front side of the drying machine, and the left side of the drum 10 corresponds to the rear side of the drying machine. Thus, in reality, the air for drying flows into the rear of the drum 10 and then is discharged to the front of the drum 10.

FIG. 2 is a plan view schematically illustrating the arrangement relationship between main components of the drying machine illustrated in FIG. 1 based on a base 70.

The drum 10 and the heater 60, which are not directly mounted on the base 70, are omitted. An upper portion of the base 70 illustrated in FIG. 2 corresponds to the rear side of the drying machine, and a lower portion thereof corresponds to the front side of the drying machine.

The condenser 40 is provided at the left side of the base 70, and the cooling fan 45, a motor 55, and the drying fan 50 are provided at the right side of the base 70. The motor 55 is provided to drive the drying fan 50.

Here, the drying fan 50 may be provided in front of the drying machine and below the drum 10. In this case, the drying fan 50 may also be disposed between the filter 30 and the condenser 40, unlike in FIG. 1.

In an example of FIG. 2, the drying fan 50 may be a suction type drying machine, because it suctions the air in the drum 10 from the front of the drum 10.

That is, in terms of the relationship between the drying fan 50 and the drum 10 or the heater 60, the drying fan 50 may be classified into a suction type drying machine and a blower type drying machine depending on whether the location of the drying fan 50 is a front end or rear end of the drum 10.

The flow of air will be described below with reference to FIGS. 1 and 2.

The air that flows into the drum 10 is discharged through the front of the drum 10, descends and flows into the condenser 40. The air discharged from the condenser 40 ascends and flows into the drum 10 via the rear of the drum 10. Additional ducts may be provided in the air circulation unit 20 for ascending and descending of the air. These ducts are connected to the drum 10 or base 70 and constitute the entire air circulation unit 20.

The external air flows into the drying machine via the cooling flow path 46 from the rear of the drying machine and is supplied to the condenser 40.

The external air supplied to the condenser 40 is heat-exchanged with the circulating air inside the condenser 40 and then is discharged in a lateral direction of the drying machine. That is, as the cooling fan 45 is driven, the external air flows into the drying machine and then is discharged via the cooling flow path 46. Of course, for enhanced heat exchange efficiency, the flow direction of the circulating air and the flow direction of the external air in the condenser 40 may be perpendicular to each other.

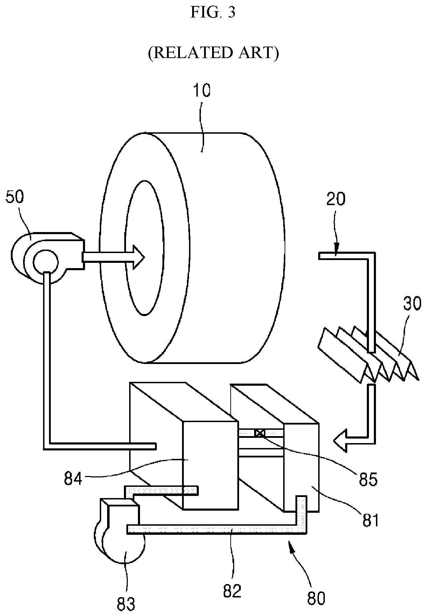

FIG. 3 is a conceptual view schematically illustrating an example of a heat pump drying machine.

As illustrated in FIG. 3, the heat pump drying machine includes the drum 10, and the air circulation unit 20 that circulates the air via the drum 10. The air discharged from the drum 10 through the air circulation unit 20 flows into the drum 10 again after undergoing condensation and heating. Thus, the air circulates through the air circulation unit 20.

For circulation of the air, the drying fan 50 is provided. The drying fan 50 is provided inside the air circulation unit 20 and generates the flow of the air.

In order to dry the clothes in the drum 10, the air is heated and cooled by a heat pump system 80. The heat pump system 80 is a one refrigerating cycle using a refrigerant. Thus, the heat pump system 80 includes a refrigerant pipe 82, an evaporation heat exchanger 81, a compressor 83, a condensation heat exchanger 84, and an expansion unit 85.

In detail, the refrigerant flows in the order of the evaporation heat exchanger 81, the compressor 83, the condensation heat exchanger 84, and the expansion unit 85 via the refrigerant pipe 82 and circulates.

The refrigerant in the evaporation heat exchanger 81 absorbs heat and evaporates. Thus, the evaporation heat exchanger 81 cools the circulating air and condenses moisture through heat-exchanging between the refrigerant and the circulating air. Thus, in terms of the circulating air, the evaporation heat exchanger 81 may be a condenser corresponding to the condenser 40 of the heater drying machine.

The refrigerant in the condensation heat exchanger 84 dissipates heat and is condensed. Thus, the condensation heat exchanger 84 heats the circulating air through heat-exchanging between the refrigerant and the circulating air. Thus, in terms of the circulating air, the condensation heat exchanger 84 may be a heater corresponding to the heater 60 of the heater drying machine.

Thus, condensation and heating of the circulating air is performed through the heat pump system 80. The circulation air flows into the drum 10. Of course, a filter 30 for removing foreign substances such as lint in the air may be provided between the drum 10 and the evaporation heat exchanger 81.

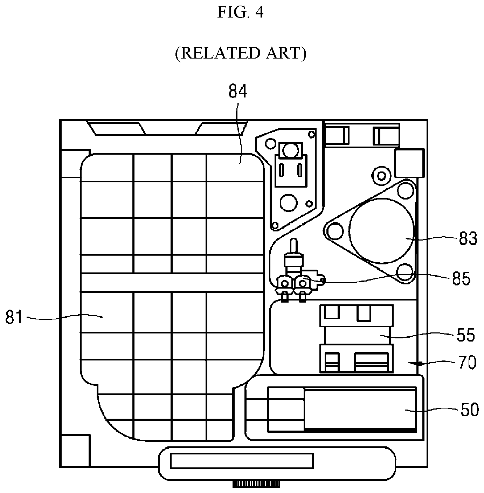

Meanwhile, the right side of the drum 10 illustrated in FIG. 3 corresponds to the front side of the drying machine, and the left side of the drum 10 of FIG. 3 corresponds to the rear side of the drying machine. Likewise, the drying machine illustrated in FIG. 3 may be a blower type drying machine, because the drying fan 50 is placed behind the drum 10 and blows the air into the drum 10. However, a drying machine illustrated in FIG. 4 may be a suction type drying machine, as described above.

FIG. 4 is a plan view schematically illustrating the relationship of arrangement between main components of the drying machine of FIG. 3 based on the base 70. The drum 10 that is not directly mounted on the base 70 is omitted. An upper portion of the base 70 illustrated in FIG. 4 corresponds to the rear side of the drying machine, and a lower portion thereof corresponds to the front side of the drying machine.

The evaporation heat exchanger 81 and the condensation heat exchanger 84 are provided at the left side of the base 70, and the expansion unit 85, the compressor 83, the motor 55, and the drying fan 50 are provided at the right side of the base 70.

The flow of the air will be described below with reference to FIGS. 3 and 4.

The air inside the drum 10 is discharged from the drum 10 through the front of the drum 10 due to a suction force of the drying fan 50. The discharged air descends and passes through the evaporation heat exchanger 81 and the condensation heat exchanger 84, and moisture of the air is removed, and the air is heated. Subsequently, the air ascends and flows into the drum 10 through the rear of the drum 10.

The heat pump drying machine does not need to have the cooling fan 45 or the cooling flow path 46 of the heater drying machine, because cooling and heating of the circulating air is performed by the heat pump system 80.

Filtering, condensation and heating of the circulating air of the heat pump drying machine may be the same as those of the above-described heater drying machine. However, heating and condensation methods thereof are different from each other. The heater 60 and the condenser 40 of the heater drying machine may correspond to the condensation heat exchanger 84 and the evaporation heat exchanger 81 of the heat pump drying machine, respectively. The heater 60 and the condensation heat exchanger 84 are configured to heat the circulating air and thus may be a heater. The condenser 40 and the evaporation heat exchanger 81 are configured to condense the circulating air and thus may be a condenser.

As described above, the air circulation unit 20 that circulates the air by including the drum 10 in the heater drying machine, and the air circulation unit 20 that circulates the air by including the drum 10 in the heat pump drying machine may be substantially the same. Drying mechanisms and structures thereof may be very similar to each other.

Meanwhile, the supply of a dual type washing machine including two washing units in one washing machine has been increased.

The dual type washing machine includes a large-capacity washing unit and a low-capacity washing unit having a relatively small capacity, which are provided in a single washing machine.

In the dual type washing machine, one washing unit may be used according to the weight or type of laundry, or two washing units may operate simultaneously by classifying the laundry according to the type of laundry.

The present invention relates to a dual type drying machine that may be used by forming a pair with a dual type washing machine.

### SUMMARY OF THE INVENTION

The present invention is directed to a drying machine including a main drying unit having a relatively large capacity and an auxiliary drying unit having a relatively small capacity.

The present invention is also directed to a drying machine including a main drying unit and an auxiliary drying unit, which are integrally formed in one cabinet and can be independently used.

The present invention is also directed to a drying machine that is capable of uniformly drying laundry by controlling the flow of air of the auxiliary drying unit.

The present invention is also directed to a drying machine that is capable of transferring waste heat generated in an operation of the main drying unit to the auxiliary drying unit so that waste heat can be utilized.

The object is solved by the features of independent claim 1. Preferred embodiments are provided in the dependent claims.

According to an aspect of the present invention, there is provided a dual type drying machine including: a main drying unit including an opening/closing door provided at a front side thereof; an auxiliary drying unit disposed above the main drying unit and including an opening/closing door provided at a top surface thereof; a stand provided inside the auxiliary drying unit; a cabinet integrally surrounding an exterior of the main drying unit and an exterior of the auxiliary drying unit; and an operation panel disposed at a front side of the auxiliary drying unit. The opening/closing door of the auxiliary drying unit forms an exterior of a top surface of the auxiliary drying unit together with a top surface of the cabinet in a state in which the opening/closing door is in a closed state.

The auxiliary drying unit may include: a laundry accommodation unit providing an accommodation space of laundry; a blower fan introducing external air into the laundry accommodation unit; a heater heating air introduced into the laundry accommodation unit; and a temperature sensor measuring temperature of air heated by the heater.

The air heated by the heater may be introduced into the laundry accommodation unit of the auxiliary drying unit through an air intake flow path, and an outlet of the air intake flow path may be disposed below the stand.

The blower fan may be disposed behind the laundry accommodation unit and below the top surface of the cabinet.

The main drying unit and the auxiliary drying unit may operate independently through the operation panel.

The stand may be attachable to/detachable from the auxiliary drying unit, and to this end, a plurality of props on which the stand is put, may be provided at inner walls of the laundry accommodation unit.

Preferably, the stand has one among a punching plate shape, a screen net shape, and a grille net shape.

The opening/closing door of the auxiliary drying unit may include a first door coupled to a rear side of the laundry accommodation unit using a hinge and a second door coupled to the first door by using a hinge. A division folding door structure may be disposed above the main drying unit so that inconvenience of opening/closing a door that may occur when a short user uses the door can be reduced. The division folding structure of the first door and the second door allow to tilt upwards in a foldable manner.

The opening/closing door of the auxiliary drying unit may include a sealing unit sealing a gap between the opening/closing door and the laundry accommodation unit, and the sealing unit may be provided in the entire region of the opening/closing door or in only a partial region thereof.

Preferably, a rear side of the auxiliary drying unit protrudes backwards further than a rear side of the main drying unit.

Preferably, the auxiliary drying unit comprises communication holes formed in a bottom surface of the laundry accommodation space.

The auxiliary drying unit may further include an exhaust flow path on which discharge of the air inside the laundry accommodation unit is guided. In this case, an inlet of the exhaust flow path and an outlet of the air intake flow path may be disposed in different regions in an upward/downward direction and/or may be disposed in different regions in a left/right direction and/or may be disposed in different regions in a forward/backward direction.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a conceptual view for describing an air circulation unit of a heater drying machine according to the related art;
FIG. 2 is a plan view of a base and peripheral components of the base of the heater drying machine illustrated in FIG. 1;
FIG. 3 is a conceptual view for describing an air circulation unit of a heat pump drying machine according to the related art;
FIG. 4 is a plan view of a base and peripheral components of the base of the heat pump drying machine illustrated in FIG. 3;
FIG. 5 is a view of a configuration of a dual type drying machine according to the present invention;
FIG. 6 is a view of a structure of a cabinet of the dual type drying machine according to the present invention;
FIG. 7 is a perspective view for describing an auxiliary drying unit according to a first embodiment of the present invention;
FIG. 8 is a cross-sectional view for describing an internal structure of the auxiliary drying unit according to the first embodiment of the present invention;
FIG. 9 is a view for describing the flow of air of the auxiliary drying unit according to the first embodiment of the present invention;
FIG. 10 is a view of a configuration of an auxiliary drying unit according to a second embodiment of the present invention;
FIG. 11 is a view of a configuration of an auxiliary drying unit according to a third embodiment of the present invention;
FIG. 12 is a cross-sectional view of a dual type drying machine according to a fourth embodiment of the present invention;
FIG. 13 is a cross-sectional view of a dual type drying machine according to a fifth embodiment of the present invention;
FIG. 14 is a cross-sectional view of a dual type drying machine according to a sixth embodiment of the present invention;
FIG. 15 is a cross-sectional view of a dual type drying machine according to a seventh embodiment of the present invention; and
FIG. 16 is a cross-sectional view of a dual type drying machine according to an eighth embodiment of the present invention.

### DETAILED DESCRIPTION OF EXEMPLARY EMBODIMENTS

The terms or words used in the present specification and claims should not be interpreted to limiting the invention in a common or dictionary sense but should be interpreted in a sense and a concept that comply with the technical idea of the present invention based on a principle that the inventor can define the concept of the terms properly so as to describe his/her own invention in a best manner. Also, embodiments described in the present specification and the configuration shown in the drawings are merely one example embodiment of the present invention and do not represent the technical idea of the present invention. Thus, it will be understood that there may be various equivalents and modifications that may replace the embodiments and the configuration at the time of filing the application within the scope defined in the appended claims.

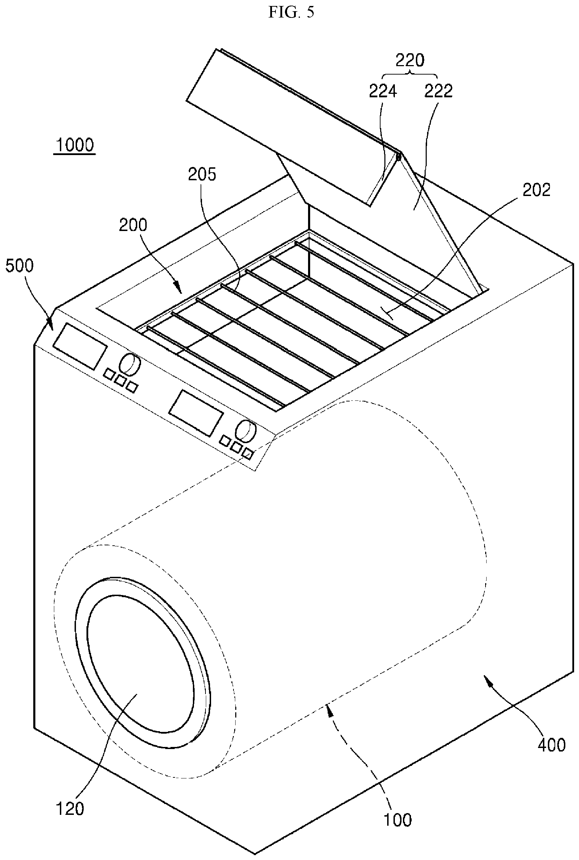

FIG. 5 is a view of a schematic configuration of a dual type drying machine according to the present invention.

As illustrated in FIG. 5, a dual type drying machine 1000 according to the present invention includes a main drying unit 100 having a relatively large capacity, an auxiliary drying unit 200 having a relatively small capacity, a cabinet 400 that surrounds the exterior of the main drying unit 100 and the exterior of the auxiliary drying unit 200, and an operation panel 500 for operating the main drying unit 100 and the auxiliary drying unit 200.

The main drying unit 100 for drying large-capacity laundry may be of a drum type having an advantage of uniformly drying the laundry. However, the main drying unit 100 of the present invention is not necessarily limited to the drum type.

In addition, the main drying unit 100 includes an opening/closing door 120 disposed at a front side thereof and may be of a horizontal shaft drum type in which laundry can be put into and taken out from the front side of the main drying unit 100. The shaft of the drum of the main drying unit 100 might be slightly inclined. However, various modifications of shaft arrangement of a drum are possible unless they do not damage the technical idea of the invention.

The main drying unit 100 may be of a blowing type in which circulating air is blown toward a rear side of the main drying unit 100, or a suction type in which the circulating air is suctioned from the front side of the main drying unit 100. Of course, a direction of the circulating air may be different from the above description. That is, a structure in which the circulating air moves to the rear side from the front side of the main drying unit 100, can also be applied to the main drying unit 100.

In addition, an electric heater, a heat pump, or a gas type heater may be used as a heating unit of the main drying unit 100.

The auxiliary drying unit 200 is disposed above the main drying unit 100.

The auxiliary drying unit 200 includes an opening/closing door 220 disposed at a top surface thereof, and provides a structure in which the laundry can be put into and taken out from the top surface of the auxiliary drying unit 200.

The auxiliary drying unit 200 for drying laundry having a relatively small capacity may be of a cabinet type. So the capacity of the auxiliary drying unit 200 is smaller than the capacity of the main drying unit 100.

The cabinet type is a type in which the laundry is accommodated and is dried by supplying heated air to the laundry. When a laundry accommodation space has a box shape with a low height, entirely uniform drying effects can be attained.

Meanwhile, a stand 205 on which the laundry can be hung or put, may be provided in the auxiliary drying unit 200. The stand 205 may be attached to or detached from the auxiliary drying unit 200. Attachment and detachment of the stand 205 may be required to dry thick laundry, because it is convenient to remove the stand 205 even during internal cleaning. In the current embodiment, the stand 205 has a shape of a grille net but may have a shape of a punching plate or screen net.

Also, the installation height of the stand 205 may be adjusted. The stand 205 may have a structure in which it protrudes slightly from inner walls of the auxiliary drying unit 200 and a plurality of props on which the stand 205 may be put, are spaced apart from one another in a vertical direction, or a structure in which the stand is guided to a rail that extends in the vertical direction and can be fixed to an arbitrary location of the rail by using a locking unit.

The opening/closing door 220 of the auxiliary drying unit 200 performs a function of opening/closing an opened side of an upper portion of a laundry accommodation unit 202. The opening/closing door 220 may include a first door 222 coupled to a rear side of the laundry accommodation unit 202 by using a hinge, and a second door 224 coupled to the first door 222 by using a hinge.

Shafts of the two hinges are parallel to each other so that the first door 222 and the second door 224 are tilted upwards in a foldable manner. Thus, when the opening/closing door 220 is open, the entire height of the auxiliary drying unit 200 is not excessively increased, and the opened side of the laundry accommodation unit 202 can be fully open.

In this case, at least the first door 222 may be formed of a transparent or semi-transparent material. This is to check whether laundry is in the laundry accommodation unit 202 or not, through the first door 222 or to check a drying state of the laundry.

The present invention is configured so that the main drying unit 100 and the auxiliary drying unit 200 operate independently. In other words, only the main drying unit 100 or the auxiliary drying unit 200 may operate, or the main drying unit 100 and the auxiliary drying unit 200 may operate simultaneously.

For example, only the main drying unit 100 may operate so as to dry the large-capacity laundry, and only the auxiliary drying unit 200 may operate so as to dry the small-capacity laundry. In addition, when part of the large-capacity laundry has to be separated from the whole laundry so as to be dried, part of laundry to be dried is put into the auxiliary drying unit 200, and the remaining laundry is put into the main drying unit 100 and then, both the auxiliary drying unit 200 and the main drying unit 100 may operate.

Operations of the main drying unit 100 and the auxiliary drying unit 200 are controlled by the operation panel 500.

The operation panel 500 is disposed on an upper portion of a front side of the drying machine 1000. When the operation panel 500 is disposed on the upper portion of the front side of the drying machine 1000, user approaching is excellent, and an operation state can be more easily checked. Preferably, this part might be inclined. However, the operation panel 500 might be also disposed at the rear top side of the drying machine 1000 and protrude upwardly. Alternatively, it might be arranged on the front portion of the top surface.

Meanwhile, the operation panel 500 is connected to the main drying unit 100 via an interconnection and also has to be connected to the auxiliary drying unit 200 via an interconnection.

However, when both the main drying unit 100 and the auxiliary drying unit 200 operate, heat is generated therein. Paths of the interconnections and a distance between the interconnections vary according to the location of the operation panel 500. Considering these points, the operation panel 500 may be disposed on an upper portion of a front side of the auxiliary drying unit 200.

The cabinet 400 forms the exterior of the main drying unit 100 and the exterior of the auxiliary drying unit 200 and secures structural rigidity of the entire drying machine 1000.

Because the area of the opening/closing door 120 of the main drying unit 100 with respect to a front side of the cabinet 400 is large, structural rigidity may be secured by a lateral panel.

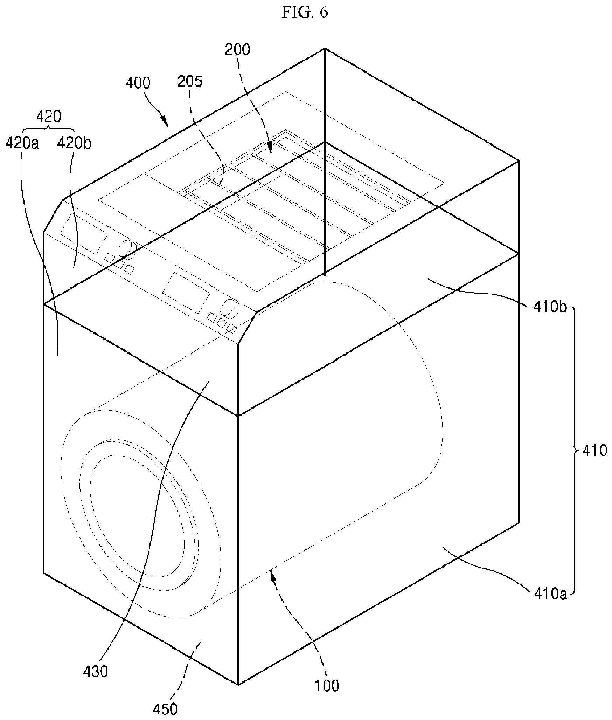

FIG. 6 is a view for describing a structure of a cabinet of the dual type drying machine according to the present invention.

The dual type drying machine according to the present invention provides a structure in which the main drying unit 100 disposed on a lower portion thereof and the auxiliary drying unit 200 disposed on an upper portion thereof are integrally formed in the cabinet 400.

The cabinet 400 includes a base 450 onto which a condenser and a drying fan of the lower main drying unit 100 are fixed, both lateral plates 410 and 420 that surround both sides of the main drying unit 100 and the auxiliary drying unit 200, and an intermediate plate 430 that connects the both lateral plates 410 and 420 while crossing between the main drying unit 100 and the auxiliary drying unit 200.

The rigidity of the main drying unit 100 is secured in a box shape formed by the base 450, the both lateral plates 410 and 420 and the intermediate plate 430, and the structural rigidity of the auxiliary drying unit 200 is secured by an upwardly-open '⊏'-shaped structure including the both lateral plates 410 and 420 and the intermediate plate 430.

Meanwhile, the both lateral plates 410 and 420 may include divided lateral plates, i.e., lower lateral plates 410a and 420a that constitute sides of the main drying unit 100, and upper lateral plates 410b and 420b that constitute sides of the auxiliary drying unit 200.

When the lateral plates are divided into upper lateral plates and lower lateral plates, a process of manufacturing the main drying unit 100 and a process of manufacturing the auxiliary drying unit 200 can be separately performed in the entire manufacturing process, and components can be commonly used in the two processes.

The dual type drying machine according to the present invention has a structure in which the lower main drying unit 100 and the upper auxiliary drying unit 200 operate independently, and integration of the main drying unit 100 and the auxiliary drying unit 200 is provided by the cabinet 400.

Thus, when the lateral plates 410 and 420 are divided into the lower lateral plates 410a and 420a that constitute the sides of the main drying unit 100 and the upper lateral plates 410b and 420b that constitute the sides of the auxiliary drying unit 200, an assembling process of the main drying unit 100 and an assembling process of the auxiliary drying unit 200 can be independently performed.

For example, the main drying unit 100 may be assembled in a module shape by using the base 450, the lower lateral plates 410a and 420a and the intermediate plate 430 as a framework, and the auxiliary drying unit 200 may be assembled in a module shape by using the upper lateral plates 410b and 420b and an upper plate as a framework, and then, the assembled modules may be coupled to each other.

In this case, a structure in which single components are coupled to each other, may be applied to a front panel that constitutes the exterior of the front side of the drying machine in consideration of design and assembling property. The lateral plates that form the exterior of the drying machine are comparatively less exposed, and it is advantageous that, in case of the front side that forms the main exterior of the drying machine, in consideration of design quality, the front case that forms the exterior of the front side is not divided but is integrally formed. Of course, the front case may also be divided into a main drying unit and an auxiliary drying unit.

In terms of assembling, the main drying unit and the auxiliary drying unit are manufactured in a module shape and are coupled to each other so that an integral type front panel can be assembled.

As described above, the main drying unit 100 and the auxiliary drying unit 200 are configured to operate independently. The main drying unit 100 may be of a drum type, and various heating units may be applied to the main drying unit 100, and a suction type or blowing type may be applied to an air circulation structure.

Hereinafter, an auxiliary drying unit of the dual type drying machine according to various embodiments of the present invention will be described.

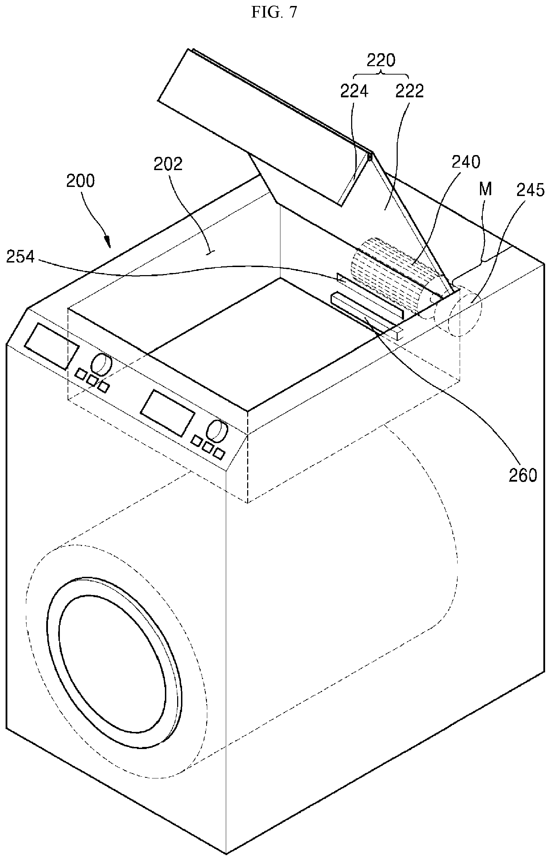

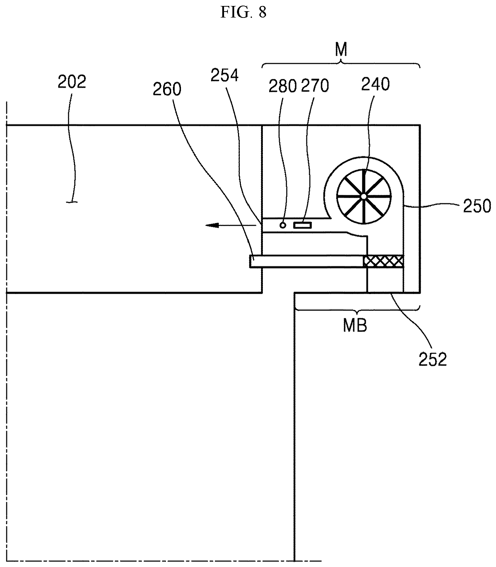

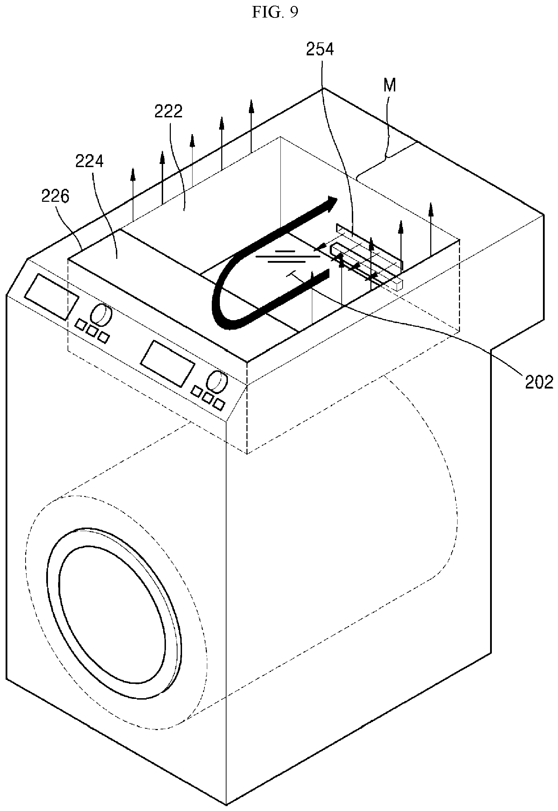

FIG. 7 is a perspective view for describing an auxiliary drying unit according to a first embodiment of the present invention, FIG. 8 is a cross-sectional view for describing an internal structure of the auxiliary drying unit according to the first embodiment of the present invention, and FIG. 9 is a view for describing the flow of air of the auxiliary drying unit according to the first embodiment of the present invention.

Referring to FIG. 7, the auxiliary drying unit 200 of the dual type drying machine according to the present invention may be of a cabinet type and may include the laundry accommodation unit 202 in which laundry is accommodated, and a machine compartment M in which a blower fan 240 for supplying heated air to the laundry accommodation unit 202, a driving motor 245 and an air intake flow path 250 are disposed.

The machine compartment M may be disposed behind the laundry accommodation unit 202.

Because a rear side of the drying machine is generally installed close to a wall surface when the drying machine is installed, when the machine compartment M is disposed behind the laundry accommodation unit 202, it is easy for the user to approach the laundry accommodation unit 202, and design advantages can be attained.

Meanwhile, a rear side of the machine compartment M of the auxiliary drying unit 200 may protrude backwards further than the rear side of the main drying unit 100. In other words, a rear side of the auxiliary drying unit 200 protrudes backwards further than the rear side of the main drying unit 100. This shape may form a stepped surface MB on a lower portion of the machine compartment M. The stepped surface MB is open toward a bottom surface of the machine compartment M even when the rear side of the machine compartment M is close to an installation wall surface.

Thus, as in the current embodiment, when an air intake inlet 252 is disposed in the stepped surface MB, even when the drying machine is installed close to the wall surface, external air can be smoothly introduced through the air intake inlet 252.

In addition, even when the dual type drying machine is installed close to the installation wall surface due to this structure, the rear side of the main drying unit 100 is spaced apart from the installation wall surface by a predetermined distance. This causes smooth air flow toward the rear side of the main drying unit 100.

Referring to FIG. 8, the driving motor 245, the blower fan 240, a heater 270, a temperature sensor 280, a filter 260, and the air intake flow path 250 are disposed inside the machine compartment M.

The blower fan 240 rotates due to the driving motor 245. The blower fan 240 is disposed inside the air intake flow path 250 and causes air inside the air intake flow path 250 to flow.

When the blower fan 240 rotates, the external air is introduced into the air intake flow path 250 through the air intake inlet 252 and then is discharged to an air intake outlet 254. The air intake outlet 254 is disposed at the rear side of the laundry accommodation unit 202. Thus, due to an operation of the blower fan 240, the external air is suctioned and is supplied to the laundry accommodation unit 202.

The filter 260 is disposed at a rear end of the air intake inlet 252 on the air intake flow path 250. The filter 260 filters foreign substances introduced into the air intake flow path 250 together with the external air. The filter 260 is disposed in a backward direction of air flow rather than the air intake inlet 252 and is disposed at an upstream side of the fan 240 and the heater 270, thereby preventing foreign substances or dust from being attached to the fan 240 and the heater 270. The filter 260 is installed in parallel to the air intake inlet 252 of the air intake flow path 250.

The filter 260 requires maintenance such as regular cleaning or replacement. Thus, in consideration of approaching for maintenance, the filter 260 may pass through the rear side of the laundry accommodation unit 202 and may be attached to or detached from the laundry accommodation unit 202.

Meanwhile, the heater 270 and the temperature sensor 280 are disposed inside the air intake flow path 250.

An electric heater may be applied to the heater 270. Because the auxiliary drying unit 200 requires heating with comparatively low capacity, the electric heater may be more suitable for the heater 270 rather than a gas type heater or heat pump. The electric heater has a simple configuration and a small size so that the volume of the electric heater inside the drying machine is compact and cost thereof is low.

The temperature sensor 280 measures the temperature of air heated by the heater 270. The temperature sensor 280 is disposed behind the electric heater 270 on a flow path of the air and measures the temperature of the air that passes through the heater 270, thereby using the measured temperature of the air as a factor for controlling the heater 270 and monitoring whether the heater 270 is overheated or not. That is, the temperature sensor 280 measures the temperature of the air that flows inside the air intake flow path 250 and transfers the measured temperature of the air to a controller. The controller adjusts an output of the heater 270 according to the temperature measured by the temperature sensor 280 so that the air at a set temperature can be supplied to the laundry accommodation unit 202.

Meanwhile, when smooth air flow is not performed inside the air intake flow path 250 due to damage or trouble of the fan 240 or the driving motor 245, due to overheating of the heater 270, there is a concern about the occurrence of trouble or fire. In preparation for this, when the temperature measured by the temperature sensor 280 exceeds a reference value, the controller may cut off power of the heater 270, indicate an error message and turn on an alarm, thereby informing the current state to the user visually and/or auditorily.

Referring to FIG. 9, the air intake outlet 254 through which the heated air supplied from the machine compartment M is introduced, is provided at the rear side of the laundry accommodation unit 202.

The air intake outlet 254 may be disposed at the rear side of the laundry accommodation unit 202 in a transverse slit shape.

Because the laundry accommodation unit 202 has a box shape with a small height and a large horizontal area, the air intake outlet 254 may have a transverse slit shape so as to uniformly supply heated air to the inside of the laundry accommodation unit 202.

The auxiliary drying unit 200 according to the current embodiment has a structure in which the air introduced into the laundry accommodation unit 202 is discharged by natural exhaust, and thus the auxiliary drying unit 200 does not include an additional exhaust flow path.

When the heated air is introduced into the laundry accommodation unit 202 and pressure inside the laundry accommodation unit 202 increases, the air inside the laundry accommodation unit 202 is naturally ventilated into a gap between the laundry accommodation unit 202 and the opening/closing door 220. In this case, the auxiliary drying unit 200 may include a sealing unit (refer to reference numeral 226 (thick line)) that prevents natural exhaust from occurring in a forward direction of the drying machine. This is to prevent hot air from being discharged toward the user when the user is in front of the drying machine.

In addition, in terms of the air flow, the air discharged from the rear of the drying machine moves forwards due to inertia and ascends. An ascending amount increases from a portion where horizontal speed due to inertia is lowered.

When the ascending air at the front of the drying machine is directly discharged by natural exhaust, the heated air may not be smoothly supplied to the rear of the drying machine.

Thus, the sealing unit 226 is disposed at a front portion of the drying machine so that the air reaches a front side of the laundry accommodation unit 202 and then returns backwards and is discharged. Here, the front portion may be the second door 224 of the opening/closing door 220.

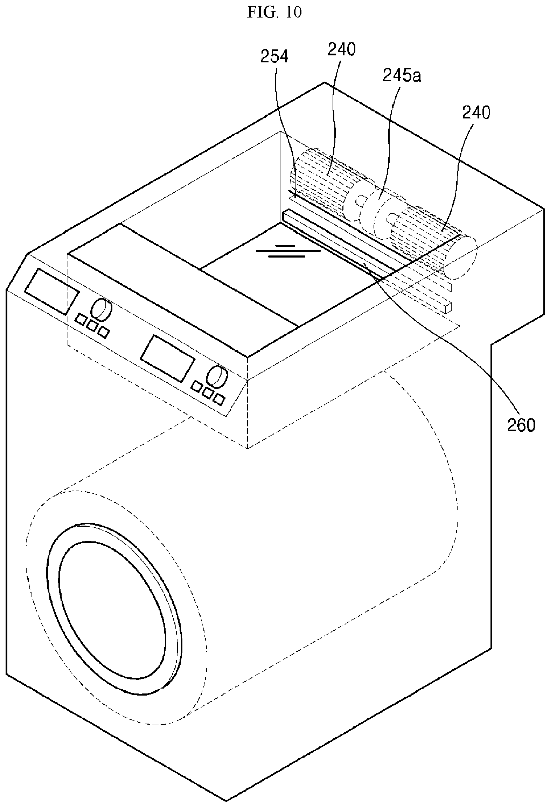

FIG. 10 is a view of a configuration of an auxiliary drying unit according to a second embodiment of the present invention.

In the auxiliary drying unit according to the second embodiment of the present invention, two blower fans 240 may be provided so as to more uniformly supply more heated air into the laundry accommodation unit 202. A heater and a temperature sensor may be disposed at a downstream side of each of the blower fans 240. Of course, unlike in the embodiment of the present invention, one blower fan 240 may be formed long. However, in this case, a structure against a sagging phenomenon of the blower fan 240 may be additionally necessary.

As illustrated in FIG. 10, when a double shaft motor is used as a driving motor 245a, the blower fan 240 is connected to both shafts of the driving motor 245a, the driving motor 245a is provided in the center of the machine compartment M and the blower fan 240 is disposed at both sides of the driving motor 245a, the heated air may be discharged from the entire rear side of the laundry accommodation unit 202. FIG. 10 illustrates a structure in which one air intake outlet 254 extends long in a left/right direction. That is, the structure may be a structure in which two blower fans share one air intake outlet 254. However, a structure in which one air intake outlet is disposed to correspond to one blower fan, may also be used.

Similarly, an air intake inlet may be shared by two blower fans or may be disposed to correspond to one blower fan. When one air intake inlet is provided, one filter may be provided so that the filter can be conveniently cleaned.

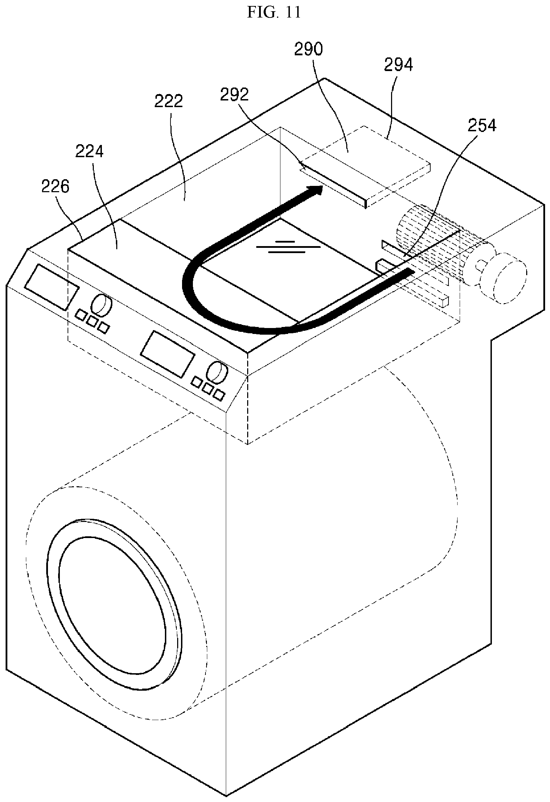

FIG. 11 is a view of a configuration of an auxiliary drying unit according to a third embodiment of the present invention.

An auxiliary drying unit 200 according to the third embodiment of the present invention further includes an exhaust flow path 290 that guides discharge of the air.

In this case, a gap between an opening of a top surface of the laundry accommodation unit 202 and the opening/closing door 220 may be sealed by a sealing unit fully surrounding the opening/closing door 220.

The heated air ascends due to natural convection and has a temperature distribution in which a temperature of an upper portion of the heated air is higher than that of a lower portion of the heated air. Thus, the sealing unit reduces discharging of the heated air upwards so that drying efficiency can be enhanced.

As illustrated in FIG. 11, the air intake outlet 254 may be disposed at one side of the rear of the laundry accommodation unit 202, and an exhaust inlet 292 of the exhaust flow path 290 may be disposed at the other side of the rear of the laundry accommodation unit 202.

Through this arrangement structure, the heated air discharged from the air intake outlet 254 circles at the front side of the laundry accommodation unit 202 and is discharged through the exhaust inlet 292. However, in order to prevent the heated air introduced into the laundry accommodation unit 202 from the air intake outlet 254 from being immediately discharged through the exhaust inlet 292, a blower type air flow structure rather than a suction type air flow structure may be used so that a discharge speed of the air introduced into the laundry accommodation unit 202 from the air intake outlet 254 can be increased. Also, a nozzle or vein structure may be further disposed near the air intake outlet 254 so as to improve the air discharge speed at the air intake outlet 254 and to improve linearity.

In the drawings, an exhaust outlet 294 of the exhaust flow path 290 is disposed at the rear side of the laundry accommodation unit 202. However, the exhaust outlet 294 may also be disposed at a top surface of the laundry accommodation unit 202 or the stepped surface MB.

In addition, in the current embodiment, the air intake outlet 254 and the exhaust inlet 292 are disposed at different positions (orthogonal positions), i.e., in upward/downward and left/right directions of the rear side of the laundry accommodation unit 202. However, the air intake outlet 254 and the exhaust inlet 292 may be disposed to be separated from each other in the upward/downward direction in the center of the laundry accommodation unit 202 or may be disposed to be separated from each other in the left/right direction at the same height.

When the air intake outlet 254 and the exhaust inlet 292 are disposed to be divided in the upward/downward direction, vertical division may be performed based on a stand (refer to reference numeral 105 of FIG. 5).

This is to assist a more effective contact of the flow of the internal air with the surface of the laundry held on the stand.

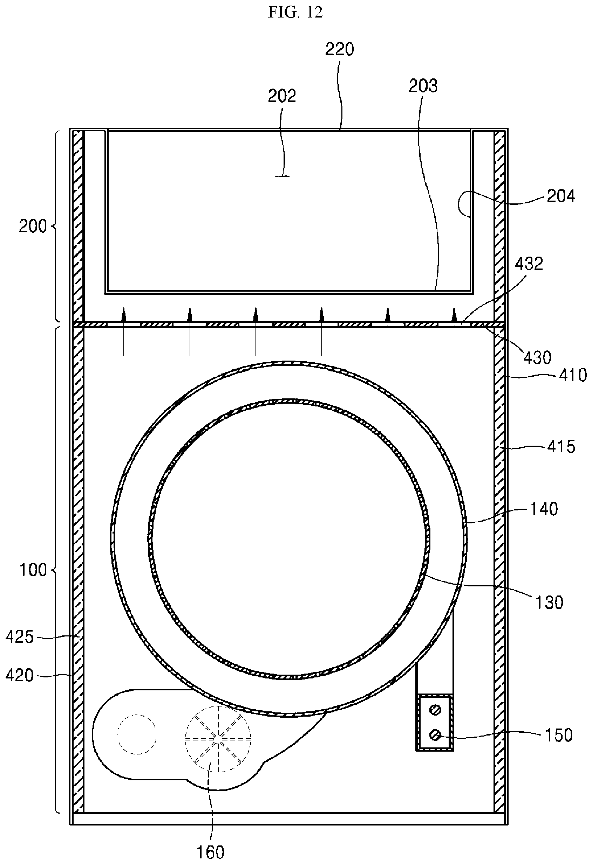

FIG. 12 is a cross-sectional view of a dual type drying machine according to a fourth embodiment of the present invention.

The dual type drying machine according to the fourth embodiment of the present invention includes through holes 432 formed in the intermediate plate 430 so that the heated air inside the main drying unit 100 can be transferred to the auxiliary drying unit 200 via the through holes 432.

The heated air ascends due to natural convection and is introduced into the auxiliary drying unit 200.

The laundry accommodation unit 202 of the auxiliary drying unit 200 is divided into a bottom surface 203 and side surfaces 204, and the opening/closing door 220 is placed at an open side of an upper portion of the auxiliary accommodation unit 202.

As illustrated in FIG. 12, the heated air inside the main drying unit 100 may pass through the through holes 432 of the intermediate plate 430 and may be introduced into the auxiliary drying unit 200. The air introduced into the auxiliary drying unit 200 heats the bottom surface 203 and the side surfaces 204 of the laundry accommodation unit 202.

Meanwhile, because the heated air inside the main drying unit 100 is transferred to the auxiliary drying unit 200, outflow of the heated air inside the main drying unit 100 toward lateral plates of the cabinet may be reduced. To this end, insulation units 415 and 425 may be provided inside the both lateral plates 410 and 420, as illustrated in FIG. 12. In this case, the insulation units 415 and 425 may be attached to only portions corresponding to sides of the main drying unit 100 and may also be attached to portions corresponding to sides of the auxiliary drying unit 200.

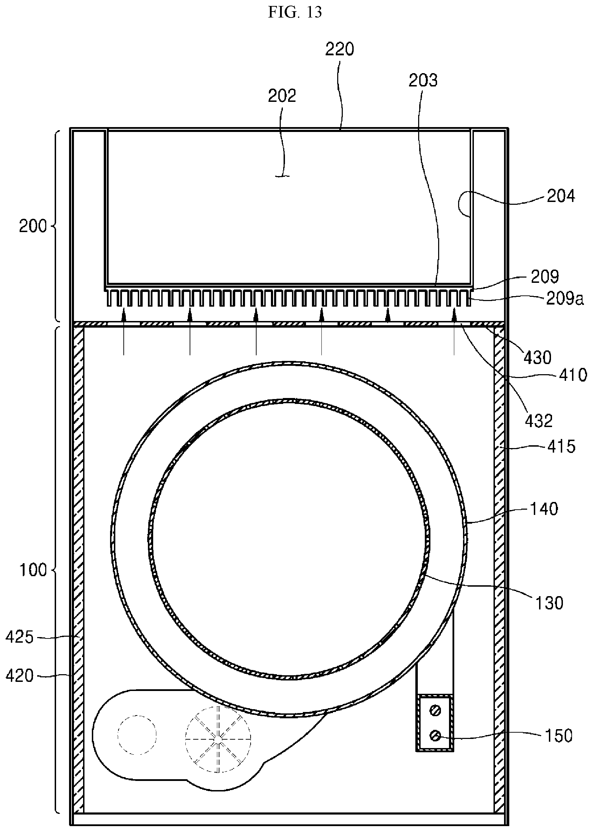

FIG. 13 is a cross-sectional view of a dual type drying machine according to a fifth embodiment of the present invention.

The dual type drying machine according to the fifth embodiment of the present invention includes a heat absorption plate 209 provided on the bottom surface 203 of the laundry accommodation unit 202 of the auxiliary drying unit 200. The heat absorption plate 209 may include a heat absorption fin 209a that enlarges a contact area between the heat absorption plate 209 and the air to improve heat absorption effect. In this case, the heat absorption fin 209a may protrude toward the intermediate plate 430.

Thus, the heated air inside the main drying unit 100 passes through the through holes 432 of the intermediate plate 430 and moves into the auxiliary drying unit 200, and the heated air inside the auxiliary drying unit 200 can transfer heat to the heat absorption plate 209.

The heat absorption plate 209 is attached to the bottom surface 203 of the laundry accommodation unit 202 and heats the bottom surface 203 of the laundry accommodation unit 202.

In the current embodiment, the heat absorption plate 209 is attached to only the bottom surface 203 of the laundry accommodation unit 202. However, the heat absorption plate 209 may also be attached to the side surfaces 204 of the laundry accommodation unit 202. Also, the heat absorption plate 209 and the bottom surface 203 may also be integrally formed.

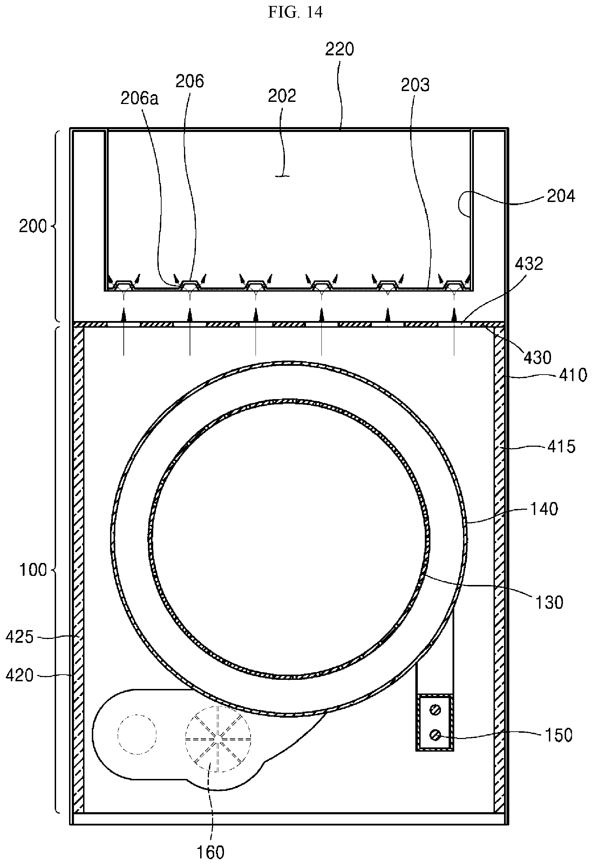

FIG. 14 is a cross-sectional view of a dual type drying machine according to a sixth embodiment of the present invention.

The dual type drying machine according to the sixth embodiment of the present invention includes communication holes 206a formed in the bottom surface 203 of the auxiliary drying unit 200. This is to cause the heated air that moves through the communication holes 206a to be introduced into the laundry accommodation unit 202 of the auxiliary drying unit 200.

The communication holes 206a may be formed simply in the form of through holes. However, the communication holes 206a may be disposed in side surfaces of protrusions 206, as illustrated in FIG. 14. When the communication holes 206a are formed simply in the form of through holes, the through holes 432 formed in the intermediate plate 430 and the communication holes 206a provided in the bottom surface 203 of the laundry accommodation unit 202 may cross one another. When the through holes 432 and the communication holes 206a are identical with one another, configurations inside the main drying unit 100 can be seen from the outside and thus it is not preferable.

As illustrated in FIG. 14, when the protrusions 206 are provided on the bottom surface 203 of the auxiliary drying unit 200 and the communication holes 206a are disposed in side surfaces of the protrusions 206, positions and sizes of the communication holes 206a may be controlled so that the flow of the supplied, heated air can be controlled.

In the drawings, the protrusions 206 protrude toward an upper portion of the bottom surface 203. However, the protrusions 206 may protrude toward the intermediate plate 430 or the protrusions 206 may be disposed to protrude toward the upper portion of the bottom surface 203 and toward the intermediate plate 430.

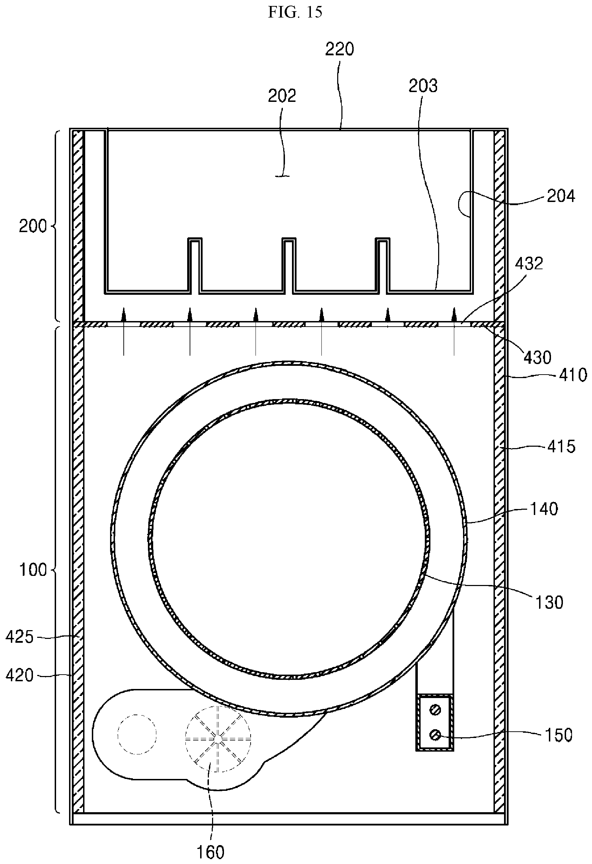

FIG. 15 is a cross-sectional view of a dual type drying machine according to a seventh embodiment of the present invention.

In the current embodiment, unevennesses are formed on the bottom surface 203 of the auxiliary drying unit 200. When unevennesses are formed on the bottom surface 203 of the auxiliary drying unit 200, as illustrated in FIG. 15, the area in which the air inside the main drying unit 100 is in contact with the bottom surface 203 of the laundry accommodation unit 202 of the auxiliary drying unit 200, is increased so that heat transfer effects can be enhanced.

Also, the space of the laundry accommodation unit 202 of the auxiliary drying unit 200 can be partitioned. The efficiency of transferring heat that moves into the laundry accommodation unit 202 through the bottom surface 203 of the auxiliary drying unit 200 can be improved. This is because the area in which the air inside the laundry accommodation unit 202 is in contact with the bottom surface 203, is increased. Through this structure, when the laundry is accommodated in the laundry accommodation unit 202 while being in close contact with the bottom surface 203, a drying time of the laundry can be reduced.

Meanwhile, the unevennesses structure of the bottom surface 203 of the laundry accommodation unit 202 may be applied to the above-described embodiments.

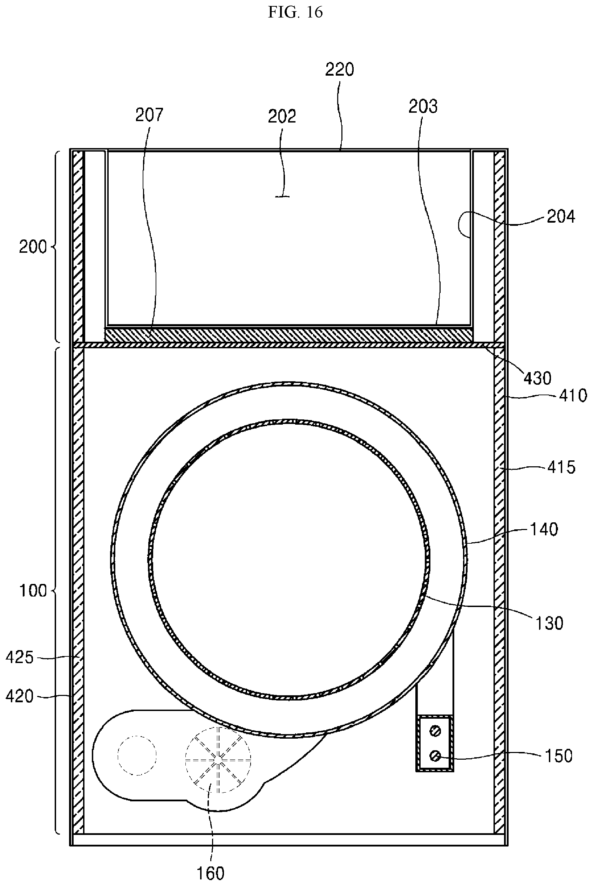

FIG. 16 is a configuration view and a cross-sectional view for describing heat transfer of a dual type drying machine according to an eighth embodiment of the present invention.

The dual type drying machine according to the eighth embodiment of the present invention includes a heat absorption plate 207 disposed between the bottom surface 203 of the laundry accommodation unit 202 of the auxiliary drying unit 200 and the intermediate plate 430, wherein both sides of the heat absorption plate 207 are in surface contact with the bottom surface 203 of the laundry accommodation unit 202 and the intermediate plate 430.

In the current embodiment, the heated air inside the main drying unit 100 is not moved, but heat of the heated intermediate plate 430 passes through the heat absorption plate 207 and can be transferred to the bottom surface 203 of the laundry accommodation unit 202 through conduction.

In this case, a gap between the heat absorption plate 207 and the bottom surface 203 or a gap between the heat absorption plate 207 and the intermediate plate 430 has viscosity, like heat transfer grease, to improve thermal conductivity, and the gap may be coated with a heat transfer fluid having high thermal conductivity.

As described above, a drying machine according to the present invention includes a main drying unit for drying large-capacity laundry and an auxiliary drying unit for drying small-capacity laundry, thereby operating the main drying unit and the auxiliary drying unit simultaneously or separately according to a user's selection. Thus, convenience of the use can be improved.

In addition, compared to an existing drying machine, an operation panel is disposed at a position in which the user easily approaches and easily operates the operation panel, and the auxiliary drying unit is installed so that the front space of the auxiliary drying unit can be utilized. Thus, the operation panel can be disposed at a position in which the entire volume of the drying machine is not greatly increased and user convenience can be improved.

In the drying machine according to the present invention, the main drying unit is open/closed toward the front side of the drying machine, and the auxiliary drying unit is open/closed toward the top surface of the drying machine so that, even when the drying machine is installed in a limited space, the laundry can be easily put into or taken out from the drying machine.

In addition, in the drying machine according to the present invention, the user can use the main drying unit and the auxiliary drying unit independently so that a more suitable drying unit for the weight of laundry to be dried among two drying units can be used and the drying unit can be selected according to characteristics of the laundry to be dried.

Also, in the drying machine according to the present invention, a cabinet type drying unit can be used for laundry that is not suitable for drum type drying, and when the large-capacity laundry is dried, the drying machine can be divided into the main drying unit and the auxiliary drying unit according to characteristics of the laundry so that drying can be performed.

In addition, in the drying machine according to the present invention, humid vapor discharged from the auxiliary drying unit is not discharged toward the user so that the user does not experience an unpleasant feeling during usage.

In addition, in the drying machine according to the present invention, a stand is provided in the auxiliary drying unit so that heated air flows in an upward/downward direction of the stand and drying efficiency can be improved.

Furthermore, in the drying machine according to the present invention, waste heat generated during an operation of the main drying unit can be supplied to the auxiliary drying unit so that the entire energy efficiency of the drying machine can be improved.

## Claims

1. A dual type drying machine (1000) comprising:
a main drying unit (100) comprising an opening/closing door (120) provided at a front side of the dual type drying machine (1000);
an auxiliary drying unit (200) disposed above the main drying unit (100) and comprising an opening/closing door (220) provided at a top surface of the auxiliary drying unit (200) disposed above the main drying unit (100); and
an operation panel (500) disposed at exterior of the dual type drying machine (1000) for operating at least one of the main drying unit (100) and the auxiliary drying unit (200);
**characterized by**,
a cabinet (400) surrounding an exterior of the main drying unit (100) and an exterior of the auxiliary drying unit (200), wherein a top exterior surface of the dual type drying machine (1000) is formed by a top surface of the opening/closing door (220) of the auxiliary drying unit (200) being closed and a top surface of the cabinet (400).

2. The dual type drying machine of claim 1, wherein the auxiliary drying unit (200) comprises a laundry accommodation unit (202) providing an accommodation space of laundry and further at least one of:
a blower fan (250) introducing external air into the laundry accommodation unit (202);
a heater (270) heating air introduced into the laundry accommodation unit (202); and
a temperature sensor (280) measuring temperature of air heated by the heater (270).

3. The dual type drying machine of claim 2, wherein an outlet (254) of an air intake flow path on which the air heated by the heater (270) is introduced into the laundry accommodation unit (202) of the auxiliary drying unit (200), is disposed below a stand (205) provided inside the auxiliary drying unit (200).

4. The dual type drying machine of claim 2 or 3, wherein the blower fan (240) is disposed behind the laundry accommodation unit (202) and below the top surface of the cabinet (400).

5. The dual type drying machine as claimed in any one of the preceding claims, wherein the main drying unit (100) and the auxiliary drying unit (200) operate independently from each other or operate together.

6. The dual type drying machine as claimed in any one of claims 3 or 4-5, when dependent on claim 3, wherein the stand (205) is attachable to/detachable from the auxiliary drying unit (200).

7. The dual type drying machine as claimed in any one of the preceding claims 3 or 4-6, when dependent on claim 3, wherein a plurality of props on which the stand (205) is put, are provided at inner walls of the laundry accommodation unit (202).

8. The dual type drying machine as claimed in any one of the preceding claims, wherein the opening/closing door (220) of the auxiliary drying unit (200) comprises a first door (222) coupled to a rear side of the laundry accommodation unit (202) by using a hinge, and a second door (204) coupled to the first door (222) by using a hinge.

9. The dual type drying machine of claim 8, wherein a length of a lateral side of the first door (222) of the opening/closing door (220) of the auxiliary drying unit (200) is larger than a length of a lateral side of the second door (224) of the opening/closing door (220) of the auxiliary drying unit (200).

10. The dual type drying machine of claim 8 or 9, wherein the opening/closing door (220) of the auxiliary drying unit (200) comprises a sealing unit (226) provided in at least a partial section thereof for sealing a gap between the opening/closing door (220) and the laundry accommodation unit (202).

11. The dual type drying machine as claimed in any one of the preceding claims, wherein both lateral plates (410, 420) of the cabinet (400) are divided into a lower lateral plate (410a, 420a) that forms sides of the main drying unit (100) and an upper lateral plate (410b, 420b) that forms sides of the auxiliary drying unit (200).

12. The dual type drying machine as claimed in any one of the preceding claims, wherein the auxiliary drying unit (200) further comprises an exhaust flow path (290) on which discharge of the air inside the laundry accommodation unit (202) is guided.

13. The dual type drying machine of claim 12, wherein an outlet (254) of an air intake flow path on which heated air is introduced into the laundry accommodation unit (202), and an inlet of the exhaust flow path (292) are disposed in different regions in an upward/downward direction or are disposed in different regions in a left/right direction.

14. The dual type drying machine as claimed in claim 1, wherein the auxiliary drying unit (202) comprises communication holes (432) formed in a bottom surface of the laundry accommodation space.

15. The dual type drying machine as claimed in any one of the preceding claims, wherein a rear side of the auxiliary drying unit (200) protrudes backwards further than a rear side of the main drying unit (100).

## Patentansprüche

1. Duale Trocknungsmaschine (1000), die Folgendes umfasst:
eine Haupttrocknungseinheit (100), die eine Tür (120) zum Öffnen und Schließen aufweist, die an einer Vorderseite der dualen Trocknungsmaschine (1000) bereitgestellt ist;
eine Hilfstrocknungseinheit (200), die über der Haupttrocknungseinheit (100) angeordnet ist und eine Tür (220) zum Öffnen und Schließen aufweist, die an einer oberen Oberfläche der Hilfstrocknungseinheit (200), die über der Haupttrocknungseinheit (100) angeordnet ist, bereitgestellt ist; und
ein Bedienfeld (500), das an einer Außenseite der dualen Trocknungsmaschine (100) angeordnet ist, um die Haupttrocknungseinheit (100) und/oder die Hilfstrocknungseinheit (200) zu bedienen;
**gekennzeichnet durch**
ein Gehäuse (400), das eine Außenseite der Haupttrocknungseinheit (100) und eine Außenseite der Hilfstrocknungseinheit (200) umgibt, wobei eine obere äußere Oberfläche der dualen Trocknungsmaschine (1000) durch eine obere Oberfläche der geschlossenen Tür (220) zum Öffnen und Schließen der Hilfstrocknungseinheit (200) und eine obere Oberfläche des Gehäuses (400) gebildet ist.

2. Duale Trocknungsmaschine nach Anspruch 1, wobei die Hilfstrocknungseinheit (200) eine Wäscheaufnahmeeinheit (202) enthält, die einen Aufnahmeraum für Wäsche bereitstellt, und ferner Folgendes umfasst:
ein Gebläse (250), das Außenluft in die Wäscheaufnahmeeinheit (202) einleitet;
eine Heizeinrichtung (270), die Luft, die in die Wäscheaufnahmeeinheit (202) eingeleitet wird, erwärmt; und
einen Temperatursensor (280), der die Temperatur der durch die Heizeinrichtung (270) erwärmten Luft misst.

3. Duale Trocknungsmaschine nach Anspruch 2, wobei ein Auslass (254) eines Lufteinlassdurchflusswegs, durch den die durch die Heizeinrichtung (270) erwärmte Luft in die Wäscheaufnahmeeinheit (202) der Hilfstrocknungseinheit (200) eingeleitet wird, unter einem Gestell (205), das in der Hilfstrocknungseinheit (200) bereitgestellt ist, angeordnet ist.

4. Duale Trocknungsmaschine nach Anspruch 2 oder 3, wobei das Gebläse (240) hinter der Wäscheaufnahmeeinheit (202) und unter der oberen Oberfläche des Gehäuses (400) angeordnet ist.

5. Duale Trocknungsmaschine nach einem der vorhergehenden Ansprüche, wobei die Haupttrocknungseinheit (100) und die Hilfstrocknungseinheit (200) unabhängig voneinander oder gemeinsam arbeiten.

6. Duale Trocknungsmaschine nach einem der Ansprüche 3 oder 4-5, wenn abhängig von Anspruch 3, wobei das Gestell (205) an der Hilfstrocknungseinheit (200) befestigt und von ihr gelöst werden kann.

7. Duale Trocknungsmaschine nach einem der vorhergehenden Ansprüche 3 oder 4-6, wenn abhängig von Anspruch 3, wobei an Innenwänden der Wäscheaufnahmeeinheit (202) mehrere Stützen, auf die das Gestell (205) gesetzt ist, bereitgestellt sind.

8. Duale Trocknungsmaschine nach einem der vorhergehenden Ansprüche, wobei die Tür (220) zum Öffnen und Schließen der Haupttrocknungseinheit (100) eine erste Tür (222), die mit einer Rückseite der Wäscheaufnahmeeinheit (202) unter Verwendung eines Scharniers gekoppelt ist, und eine zweite Tür (204), die mit der ersten Tür (222) unter Verwendung eines Scharniers gekoppelt ist, umfasst.

9. Duale Trocknungsmaschine nach Anspruch 8, wobei eine Länge eine seitlichen Seite der ersten Tür (222) der Tür (220) zum Öffnen und Schließen der Hilfstrocknungseinheit (200) größer ist als eine Länge eine seitlichen Seite der zweiten Tür (224) der Tür (220) zum Öffnen und Schließen der Hilfstrocknungseinheit (200).

10. Duale Trocknungsmaschine nach Anspruch 8 oder 9, wobei die Tür (220) zum Öffnen und Schließen der Hilfstrocknungseinheit (200) eine Dichtungseinheit (226) aufweist, die wenigstens in einem Teilabschnitt hiervon bereitgestellt ist, um einen Spalt zwischen der Tür (220) zum Öffnen und Schließen und der Wäscheaufnahmeeinheit (202) abzudichten.

11. Duale Trocknungsmaschine nach einem der vorhergehenden Ansprüche, wobei beide seitlichen Platten (410, 420) des Gehäuses (400) jeweils in eine untere seitliche Platte (410a, 420a), die Seiten der Haupttrocknungseinheit (100) bildet, und in eine obere seitliche Platte (410b, 420b), die Seiten der Hilfstrocknungseinheit (200) bildet, unterteilt sind.

12. Duale Trocknungsmaschine nach einem der vorhergehenden Ansprüche, wobei die Hilfstrocknungseinheit (200) ferner einen Auslassdurchflussweg (290), durch den die Entleerung der Luft in der Wäscheaufnahmeeinheit (202) geführt wird, umfasst.

13. Duale Trocknungsmaschine nach Anspruch 12, wobei ein Auslass (254) des Lufteinlassdurchflusswegs, durch den erwärmte Luft in die Wäscheaufnahmeeinheit (202) eingeleitet wird, und ein Einlass des Auslassdurchflusswegs (292) in unterschiedlichen Bereichen in Aufwärts/Abwärts-Richtung oder in unterschiedlichen Bereichen in Links/Rechts-Richtung angeordnet sind.

14. Duale Trocknungsmaschine nach Anspruch 1, wobei die Wäscheaufnahmeeinheit (202) Kommunikationslöcher (432) aufweist, die in einer unteren Oberfläche des Wäscheaufnahmeraums ausgebildet sind.

15. Duale Trocknungsmaschine nach einem der vorhergehenden Ansprüche, wobei eine Rückseite der Hilfstrocknungseinheit (200) weiter als eine Rückseite der Haupttrocknungseinheit (100) nach hinten vorsteht.

## Revendications

1. Machine à sécher de type double (1000) comportant :
une unité de séchage principale (100) comportant une porte d'ouverture/fermeture (120) agencée sur un côté avant de la machine à sécher de type double (1000) ;
une unité de séchage auxiliaire (200) disposée au-dessus de l'unité de séchage principale (100) et comportant une porte d'ouverture/fermeture (220) agencée sur une surface supérieure de l'unité de séchage auxiliaire (100) disposée au-dessus de l'unité de séchage principale (100) ; et
un panneau de commande (500) disposé à l'extérieur de la machine à sécher de type double (1000) pour faire fonctionner au moins une unité parmi l'unité de séchage principale (100) et l'unité de séchage auxiliaire (200) ;
**caractérisée par**
une carrosserie (400) entourant un extérieur de l'unité de séchage principale (100) et un extérieur de l'unité de séchage auxiliaire (200), dans laquelle une surface extérieure supérieure de la machine à sécher de type double (1000) est formée par une surface supérieure de la porte d'ouverture/fermeture (220) de l'unité de séchage auxiliaire (200) étant fermée et une surface supérieure de la carrosserie (400).

2. Machine à sécher de type double selon la revendication 1, dans laquelle l'unité de séchage auxiliaire (200) comporte une unité de réception de linge (202) fournissant un espace de réception de linge et au moins un élément parmi :
un ventilateur soufflant (250) introduisant de l'air externe dans l'unité de réception de linge (202) ;
un élément chauffant (270) chauffant l'air introduit dans l'unité de réception de linge (202) ; et
un capteur de température (280) mesurant la température de l'air chauffé par l'élément chauffant (270).

3. Machine à sécher de type double selon la revendication 2, dans laquelle une sortie (254) d'un trajet d'écoulement d'admission d'air sur lequel l'air chauffé par l'élément chauffant (270) est introduit dans l'unité de réception de linge (202) de l'unité de séchage auxiliaire (200), est disposée sous un bâti (205) agencé à l'intérieur de l'unité de séchage auxiliaire (200).

4. Machine à sécher de type double selon la revendication 2 ou 3, dans laquelle le ventilateur soufflant (240) est disposé derrière l'unité de réception de linge (202) et sous la surface supérieure de la carrosserie (400).

5. Machine à sécher de type double selon l'une quelconque des revendications précédentes, dans laquelle l'unité de séchage principale (100) et l'unité de séchage auxiliaire (200) fonctionnent indépendamment l'une de l'autre ou fonctionnent ensemble.

6. Machine à sécher de type double selon l'une quelconque des revendications 3 ou 4 à 5 lorsqu'elles dépendent de la revendication 3, dans laquelle le bâti (205) peut être attaché à l'unité de séchage auxiliaire (200) ou être détaché de celle-ci.

7. Machine à sécher de type double selon l'une quelconque des revendications 3 ou 4 à 6 précédentes lorsqu'elles dépendent de la revendication 3, dans laquelle une pluralité de supports sur lesquels le bâti (205) est placé, sont agencés sur des parois intérieures de l'unité de réception de linge (202).

8. Machine à sécher de type double selon l'une quelconque des revendications précédentes, dans laquelle la porte d'ouverture/fermeture (220) de l'unité de séchage auxiliaire (200) comporte une première porte (222) couplée à un côté arrière de l'unité de réception de linge (202) en utilisant une charnière, et une seconde porte (204) couplée à la première porte (222) en utilisant une charnière.

9. Machine à sécher de type double selon la revendication 8, dans laquelle une longueur d'un côté latéral de la première porte (222) de la porte d'ouverture/fermeture (220) de l'unité de séchage auxiliaire (200) est plus grande qu'une longueur d'un côté latéral de la seconde porte (224) de la porte d'ouverture/fermeture (220) de l'unité de séchage auxiliaire (200).

10. Machine à sécher de type double selon la revendication 8 ou 9, dans laquelle la porte d'ouverture/fermeture (220) de l'unité de séchage auxiliaire (200) comporte une unité d'étanchéité (226) agencée dans au moins une section partielle de celle-ci pour étanchéifier un espace entre la porte d'ouverture/fermeture (220) et l'unité de réception de linge (202).

11. Machine à sécher de type double selon l'une quelconque des revendications précédentes, dans laquelle les deux plaques latérales (410, 420) de la carrosserie (400) sont divisées en une plaque latérale inférieure (410a, 420a) qui forme des côtés de l'unité de séchage principale (100) et une plaque latérale supérieure (410b, 420b) qui forme des côtés de l'unité de séchage auxiliaire (200).

12. Machine à sécher de type double selon l'une quelconque des revendications précédentes, dans laquelle l'unité de séchage auxiliaire (200) comporte en outre un trajet d'écoulement d'évacuation (290) sur lequel une évacuation de l'air à l'intérieur de l'unité de réception de linge (202) est guidée.

13. Machine à sécher de type double selon la revendication 12, dans laquelle une sortie (254) d'un trajet d'écoulement d'admission d'air sur lequel l'air chauffé est introduit dans l'unité de réception de linge (202), et une entrée du trajet d'écoulement d'évacuation (292) sont disposées dans différentes zones dans une direction vers le haut/bas ou sont disposées dans différentes zones dans une direction vers la gauche/droite.

14. Machine à sécher de type double selon la revendication 1, dans laquelle l'unité de séchage auxiliaire (200) comporte des trous de communication (432) formés dans une surface inférieure de l'espace de réception de linge.

15. Machine à sécher de type double selon l'une quelconque des revendications précédentes, dans laquelle un côté arrière de l'unité de séchage auxiliaire (200) fait saillie vers l'arrière plus loin qu'un côté arrière de l'unité de séchage principale (100).
